# EUROPÄISCHE PATENTSCHRIFT

(11) **EP 3 384 295 B1**
(45) Veröffentlichungstag und Bekanntmachung des Hinweises auf die Patenterteilung: **19.06.2019**
(21) Anmeldenummer: 16801193.0
(22) Anmeldetag: 24.11.2016
(51) Int. Cl.: G01P 15/09

(54) **BESCHLEUNIGUNGS-MESSGERAET UND VERFAHREN ZUR HERSTELLUNG EINES SOLCHEN BESCHLEUNIGUNGS-MESSGERAETES**
SENSOR FOR MEASURING ACCELERATION AND METHOD FOR MANUFACTURING SUCH A SENSOR FOR MEASURING ACCELERATION
APPAREIL DE MESURE D'ACCELERATION ET PROCEDE DE FABRICATION D'UN TEL APPAREIL DE MESURE D'ACCELERATION

(30) Priorität: 04.12.2015 EP 15198032
(43) Veröffentlichungstag der Anmeldung: 10.10.2018
(73) Patentinhaber: Kistler Holding AG, 8408 Winterthur (CH)
(72) Erfinder: ROSA, Flavio, 5400 Baden (CH)
(86) Internationale Anmeldenummer: PCT/EP2016/078611
(87) Internationale Veröffentlichungsnummer: WO 2017/093100

(56) Entgegenhaltungen:
- EP-A1- 0 016 858
- DE-A1- 2 712 359

## Beschreibung

### Technisches Gebiet

Die Erfindung betrifft ein Beschleunigungs-Messgerät nach dem Oberbegriff des unabhängigen Anspruchs sowie ein Verfahren zur Herstellung eines solchen Beschleunigungs-Messgerätes.

### Stand der Technik

Die Schrift CH399021A zeigt ein Beschleunigungs-Messgerät mit einem piezoelektrischen System, einer seismischen Masse, einer Vorspannhülse und einer Grundplatte. Das piezoelektrische System ist mittels der Vorspannhülse zwischen der seismischen Masse und der Grundplatte mechanisch vorgespannt. Bei Beschleunigung übt die seismische Masse eine ihrer Beschleunigung proportionale Kraft auf das piezoelektrische System aus. Durch die mechanische Vorspannung werden sowohl positive als auch negative Beschleunigungen erfasst. Die Kraft wiederum erzeugt im piezoelektrischen System piezoelektrische Ladungen, welche als Beschleunigungssignale elektrisch ableitbar sind. Die Beschleunigungssignale sind proportional zur Grösse der Kraft. Elektrisch abgeleitete Beschleunigungssignale lassen sich in einer Auswerteeinheit elektrisch verstärken und auswerten.

Ein solches Beschleunigungs-Messgerät zum Messen von Schock und Vibration wird von der Anmelderin unter der Typenbezeichnung 8002K kommerziell vertrieben. Das Beschleunigungs-Messgerät ist in einem mechanisch stabilen Gehäuse aus rostfreiem Stahl angeordnet. Laut Datenblatt 8002_00_205d_07.05 wiegt es 20Gramm ist über einen Montagebolzen an beliebigen Messobjekten anbringbar. Der Messbereich liegt im Bereich von ±1000g, die Resonanzfrequenz beträgt 40kHz und die Betriebstemperatur reicht von -70°C bis +120°C.

Eine erste Aufgabe der vorliegenden Erfindung ist es, dieses bekannte Beschleunigungs-Messgerät zu verbessern. Eine weitere Aufgabe der Erfindung besteht darin, ein kostengünstiges Verfahren zur Herstellung eines solchen Beschleunigungs-Messgerätes aufzuzeigen.

### Darstellung der Erfindung

Die erste Aufgabe wird durch die Merkmale des unabhängigen Anspruchs gelöst.

Die Erfindung betrifft ein Beschleunigungs-Messgerät mit einem piezoelektrischen System, einer seismischen Masse und einer Vorspannanordnung; bei Beschleunigung übt die seismische Masse eine ihrer Beschleunigung proportionale Kraft auf das piezoelektrische System aus, welche Kraft im piezoelektrischen System piezoelektrische Ladungen erzeugt, und welche piezoelektrischen Ladungen als Beschleunigungssignale elektrisch ableitbar sind, wobei die seismische Masse zwei Masseelemente aufweist; wobei positive piezoelektrischen Ladungen an einem ersten Masseelement als Beschleunigungssignale elektrisch abgreifbar sind; und wobei negative piezoelektrischen Ladungen an einem zweiten Masseelement als Beschleunigungssignale elektrisch abgreifbar sind.

Der Vorteil der aus zwei Masseelementen bestehenden seismischen Masse liegt darin, dass Beschleunigungssignale nun an den Masseelementen elektrisch abgreifbar sind, welche Masseelemente aufgrund ihrer räumlichen Ausdehnung elektrisch und mechanisch einfach verbindbar sind. Im Ergebnis ist das Beschleunigungs-Messgerät so kostengünstig herstellbar.

### Kurze Beschreibung der Zeichnungen

Im Folgenden wird eine Ausführungsform der Erfindung beispielhaft unter Beizug der Figuren näher erklärt. Es zeigen
- Fig. 1: einen Schnitt durch einen Teil des Beschleunigungs-Messgerätes;
- Fig. 2: eine perspektivische Ansicht eines Teiles des Beschleunigungs-Messgerätes nach Fig. 1 ohne Vorspannanordnung, Gehäuse und Abdeckung;
- Fig. 3: ein Schnitt durch eine piezoelektrische Aufnehmergruppe des Beschleunigungs-Messgerätes nach Fig. 1 oder 2 vor der mechanischen Vorspannung mittels der Vorspannanordnung;
- Fig. 4: der Schnitt durch die piezoelektrische Aufnehmergruppe nach Fig. 3 nach der mechanischen Vorspannung mittels der Vorspannanordnung;
- Fig. 5: ein Schema der elektrische Verbindung des piezoelektrischen Systems mit der seismischen Masse des Beschleunigungs-Messgerätes nach Fig. 1 oder 2;
- Fig. 6: eine perspektivische Ansicht einer Elektrode des piezoelektrischen Systems des Beschleunigungs-Messgerätes nach Fig. 1 oder 2;
- Fig. 7: ein Schnitt durch einen Teil des Beschleunigungs-Messgerätes nach Fig. 1 oder 2 mit elektrischen Kontakten und Signalkabel;
- Fig. 8: eine perspektivische Ansicht des Beschleunigungs-Messgerätes nach Fig. 7 vor Montage der Schutzhülse; und
- Fig. 9: die perspektivische Ansicht des Beschleunigungs-Messgerätes nach Fig. 8 nach Montage der Schutzhülse.

### Wege zur Ausführung der Erfindung

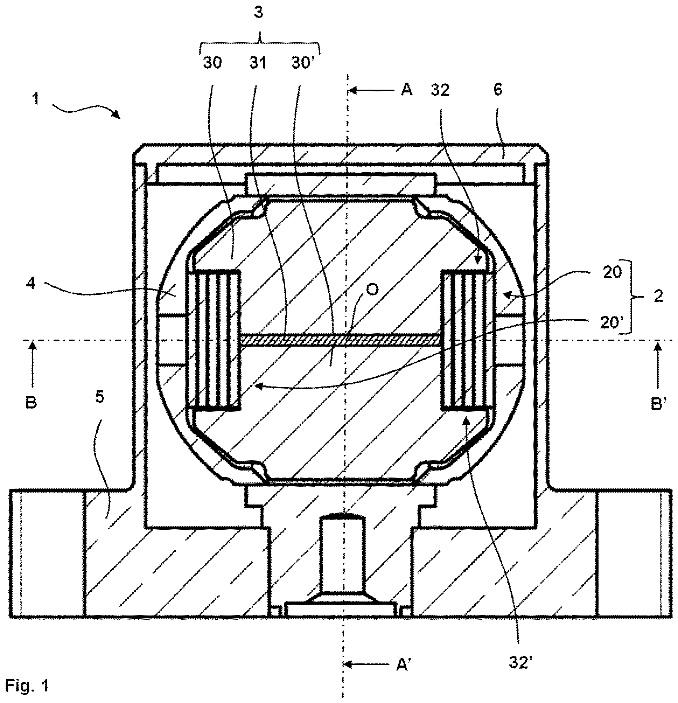

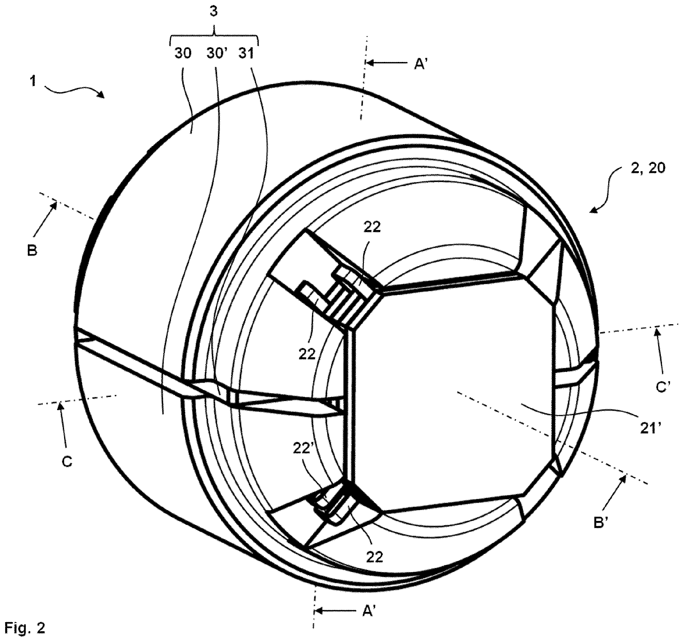

Fig. 1 zeigt einen Schnitt durch einen Teil einer Ausführungsform des Beschleunigungs-Messgerätes 1. Der Schnitt erfolgt entlang Vertikalachse AA' und einer Längsachse BB'. Eine Horizontalachse CC' des Beschleunigungs-Messgerätes 1 ist in dessen perspektivischer Ansicht nach Fig. 2 dargestellt. Die drei Achsen stehen senkrecht aufeinander und schneiden sich in einem Mittelpunkt O des Beschleunigungs-Messgerätes 1.

Das Beschleunigungs-Messgerät 1 weist ein Gehäuse 5 und eine Abdeckung 6 aus mechanisch beständigem Material wie aus Reinmetallen, Nickellegierungen, Kobaltlegierungen, Eisenlegierungen, usw. auf. Bezüglich der Vertikalachse AA' ist das Gehäuse 5 im Querschnitt hohlzylinderförmig und die Abdeckung 6 ist im Querschnitt kreisförmig. Bei Kenntnis der vorliegenden Erfindung kann der Fachmann auch ein Gehäuse und eine Abdeckung mit anderen Querschnittsformen wie ein Vieleck, usw. vorsehen. Gehäuse 5 und Abdeckung 6 sind mechanisch miteinander verbunden. Die mechanische Verbindung erfolgt durch Stoffschluss wie Schweissen, Diffusionsschweissen, Thermokompressionsbonden, Löten, usw.. Gehäuse 5 und Abdeckung 6 schützen das Beschleunigungs-Messgerät 1 vor schädlichen Umwelteinflüssen wie Verunreinigungen (Staub, Feuchtigkeit, usw.) und vor elektrischen und elektromagnetischen Störeffekten in Form von elektromagnetischer Strahlung.

Das Beschleunigungs-Messgerät 1 weist eine seismische Masse 3 auf. Die seismische Masse 3 ist kugelförmig und um den Mittelpunkt O angeordnet und weist mehrere, vorzugsweise zwei Masseelemente 30, 30' und eine elektrische Isolation 31 auf. Die Masseelemente 30, 30' bestehen aus mechanisch beständigem Material wie aus Reinmetallen, Nickellegierungen, Kobaltlegierungen, Eisenlegierungen, usw.. Die elektrische Isolation 31 besteht aus elektrisch isolierendem und mechanisch steifem Material wie Keramik, Al₂O₃-Keramik, Saphir, usw.. Bezüglich der Vertikalachse AA' sind die Masseelemente 30, 30' im Querschnitt zylinderförmig und die elektrische Isolation 31 ist im Querschnitt rechteckig. Bei Kenntnis der vorliegenden Erfindung kann der Fachmann auch Masseelemente und eine elektrische Isolation mit anderen Querschnittsformen wie ein Vieleck, ein Kreis, usw. vorsehen. Die Masseelemente 30, 30' sind vorzugsweise Gleichteile. Bezüglich der Vertikalachse AA' ist die elektrische Isolation 31 zwischen den Masseelementen 30, 30' angeordnet und isoliert die Masseelemente 30, 30' elektrisch gegeneinander. Die Masseelemente 30, 30' und die elektrische Isolation 31 sind im direkten mechanischen Kontakt. Ein Isolationswiderstand der elektrischen Isolation 31 ist grösser/gleich 10¹⁰Ω. Die Masseelemente 30, 30' sind aufgrund ihrer räumlichen Ausdehnung elektrisch und mechanisch einfach verbindbar. Die Masseelemente 30, 30' weisen an ihren längsachsigen Enden Aussparungen 32, 32' auf. Bezüglich der Längsachse BB' sind die Aussparungen 32, 32' im Querschnitt rechteckig. Auch hier kann der Fachmann bei Kenntnis der Erfindung andere Querschnittsformen wie ein Kreis, usw. vorsehen.

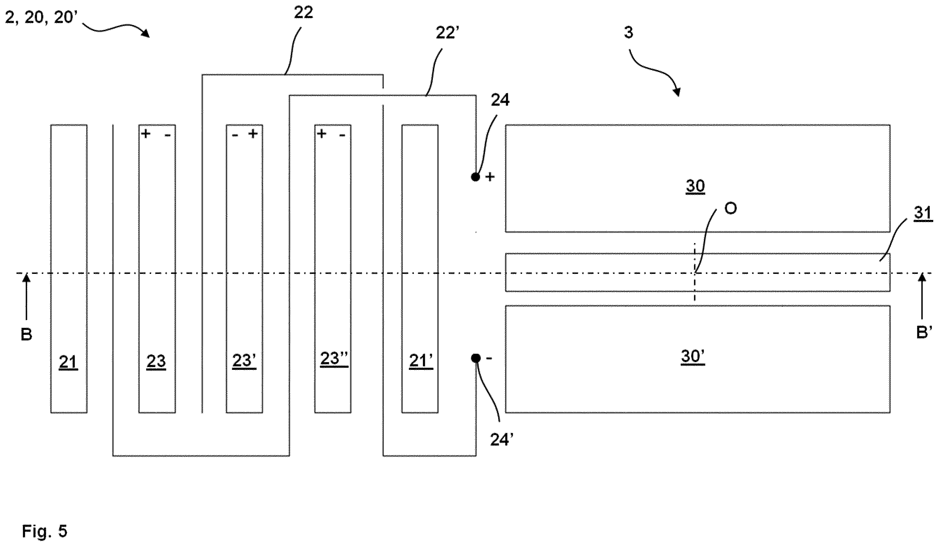

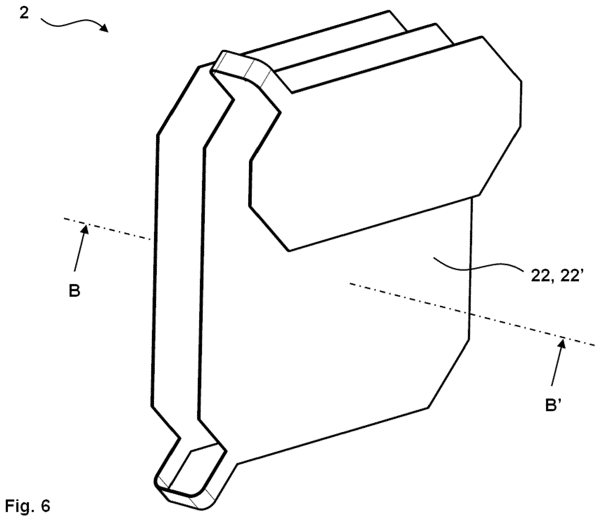

Das Beschleunigungs-Messgerät 1 weist ein piezoelektrisches System 2. Das piezoelektrische System 2 weist mehrere, vorzugsweise zwei Systemelemente 20, 20' auf. Die Systemelemente 20, 20' sind identisch aufgebaut. Der Aufbau der Systemelemente 20, 20' ist im Schema nach Fig. 5 dargestellt. Jedes Systemelement 20, 20' weist mehrere elektrische Isolatorelemente 21, 21', mehrere Elektroden 22, 22' und mehrere piezoelektrische Elemente 23, 23', 23" auf. Jedes Systemelement 20, 20' weist vorzugsweise zwei elektrische Isolatorelemente 21, 21' auf. Die elektrischen Isolatorelemente 21, 21' sind bezüglich der Längsachse BB' im Querschnitt rechteckig und bestehen aus elektrisch isolierendem und mechanisch steifem Material wie Keramik, Al₂O₃-Keramik, Saphir, usw.. Ein Isolationswiderstand der elektrischen Isolatorelemente 21, 21' ist grösser/gleich 10¹⁰Ω. Auch die Elektroden 22, 22' sind bezüglich der Längsachse BB' im Querschnitt rechteckig und bestehen aus elektrisch leitfähigem Material wie aus Reinmetallen, Nickellegierungen, Kobaltlegierungen, Eisenlegierungen, usw.. Fig. 6 zeigt eine perspektivische Ansicht einer Elektrode 22, 22'. Jedes Systemelement 20, 20' weist vorzugsweise zwei Elektroden 22, 22' auf. Jede Elektrode 22, 22' ist einstückig und weist mehrere, vorzugsweise drei Elektrodenflächen auf, die über mehrere, vorzugsweise zwei Gelenke mechanisch miteinander verbunden sind. Die Elektrode 22, 22' sammelt mit den Elektrodenflächen piezoelektrische Ladungen von mehreren, vorzugsweise drei piezoelektrischen Elementen 23, 23', 23" auf. Die piezoelektrischen Elemente 23, 23', 23" sind bezüglich der Längsachse BB' im Querschnitt rechteckig und bestehen aus piezoelektrischem Material wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, Piezokeramik, usw.. Die piezoelektrischen Elemente 23, 23', 23" sind kristallographisch so orientiert geschnitten, dass sie eine hohe Empfindlichkeit für die aufzunehmende Kraft haben. Vorzugsweise weist das piezoelektrische Material eine hohe Empfindlichkeit für den longitudinalen oder den transversalen Schubeffekt auf. Dabei sind die piezoelektrischen Elemente 23, 23', 23" so orientiert, dass negative und positive piezoelektrische Ladungen auf Oberflächen erzeugt werden, die senkrecht oder parallel zu einer Schubspannungsachse stehen. Die negativen und positiven piezoelektrischen Ladungen sind in Fig. 5 als + und - dargestellt. Diese piezoelektrischen Ladungen sind als Beschleunigungssignale elektrisch abgreifbar. Bei Kenntnis der vorliegenden Erfindung kann der Fachmann für die elektrischen Isolatorelemente, die Elektroden und die piezoelektrischen Elemente andere Querschnittsformen wie ein Kreis, usw. vorsehen.

Im Schema des piezoelektrischen Systems 2 nach Fig. 5 sind drei piezoelektrische Elemente 23, 23', 23" zwischen zwei elektrischen Isolatorelementen 21, 21' angeordnet. Ein erstes elektrisches Isolatorelement 21 ist vom Mittelpunkt O abgewandt und ein zweites elektrisches Isolatorelement 21' ist dem Mittelpunkt O zugewandt. Diese fünf Elemente sind in den Fig. 1 bis 4 als Stapel dargestellt und in den Aussparungen 32, 32' angeordnet. Die Aussparungen 32, 32' sind so dimensioniert, dass sie die Systemelemente 20, 20' weitgehend vollständig aufnehmen. Das Adjektiv "weitgehend" beinhaltet eine Ungenauigkeit von ±10%. Somit sind das piezoelektrische System 2 und die seismische Masse 3 platzsparend, d.h. das piezoelektrische System 2 ist unter grösstmöglicher Raumnutzung innerhalb einer Kugeloberfläche der seismischen Masse 3 angeordnet.

Zwei Elektroden 22, 22' sind mit ihren drei Elektrodenflächen an den Oberflächen der piezoelektrischen Elementen 23, 23', 23" angeordnet. Die Elektroden 22, 22' sind vorzugsweise Gleichteile. Eine positive Elektrode 22 nimmt positive piezoelektrische Ladungen von den Oberflächen der piezoelektrischen Elemente 23, 23', 23" auf, eine negative Elektrode 22' nimmt negative piezoelektrische Ladungen von den Oberflächen der piezoelektrischen Elemente 23, 23', 23" auf. Jeweils ein Ende 24, 24' der Elektroden 22, 22' ist mit einem Masseelement 30, 30' elektrisch und mechanisch verbunden. Die positive Elektrode 22 ist über ihr Ende 24 mit dem bezüglich des Mittelpunktes O und der Vertikalachse AA' oberen ersten Masselement 30 elektrisch und mechanisch verbunden. Die negative Elektrode 22' ist über ihr Ende 24' mit dem bezüglich des Mittelpunktes O und der Vertikalachse AA' unteren zweiten Masselement 30' elektrisch und mechanisch verbunden. Die elektrischen und mechanischen Verbindungen erfolgen durch Kraftschluss wie Pressung, Haftreibung, usw. auf Oberflächen der Masseelemente 30, 30'. Die Elektroden 22, 22' greifen somit die negativen und positiven piezoelektrischen Ladungen als Beschleunigungssignale elektrisch ab und leiten sie elektrisch an die Masseelemente 30, 30' ab.

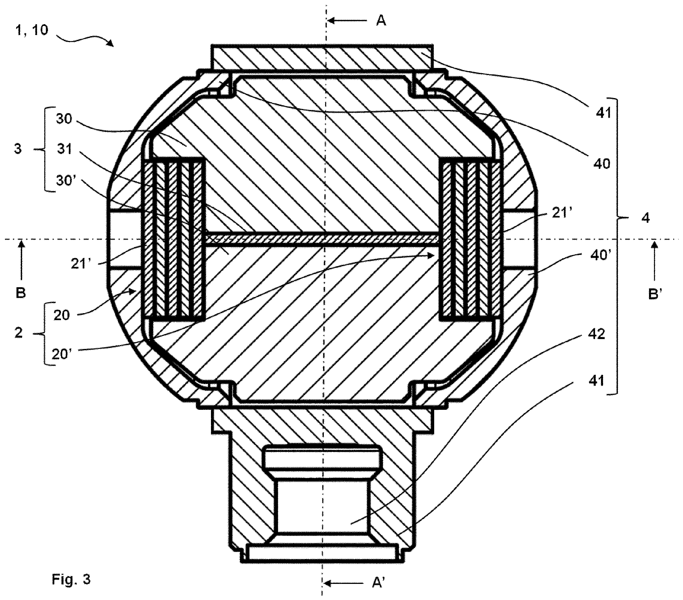

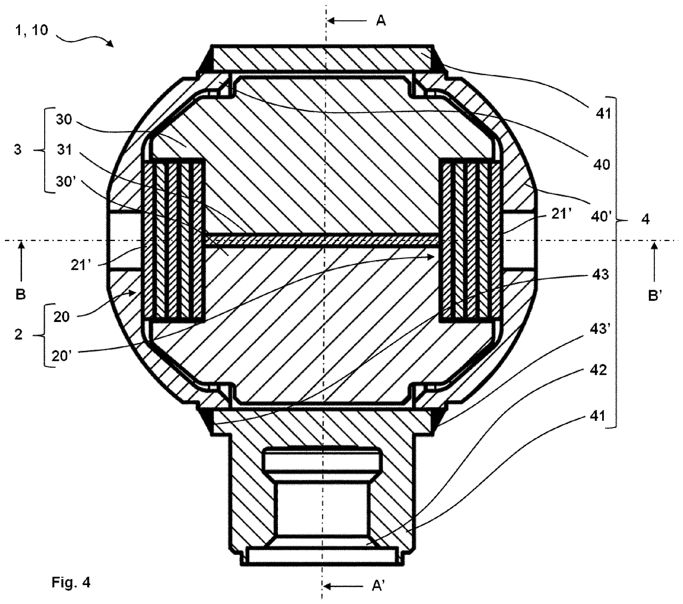

Das Beschleunigungs-Messgerät 1 weist eine Vorspannanordnung 4 auf, die aus zwei Kappen 40, 40' und einer Hülse 41 besteht. Wie in Fig. 3 und 4 dargestellt, sind die Kappen 40, 40' bezüglich der Längsachse BB' im Querschnitt schalenförmig und die Hülse 41 ist bezüglich der Längsachse BB' im Querschnitt hohlzylinderförmig. Die Vorspannanordnung 4 besteht aus mechanisch steifem Material wie aus Reinmetallen, Nickellegierungen, Kobaltlegierungen, Eisenlegierungen, usw.. Bei Kenntnis der vorliegenden Erfindung kann der Fachmann auch Kappen und eine Hülse mit anderen Querschnittsformen wie ein Vieleck, usw. vorsehen. Die Kappen 40, 40' sind vorzugsweise Gleichteile. Die Hülse 41 weist ein Befestigungselement 42 auf. Mit dem Befestigungselement 42 erfolgt eine mechanische Verbindung mit einem nicht dargestellten Messobjekt. Die mechanische Verbindung ist eine mechanisch kraftschlüssige Verbindung wie ein Schraubverbindung, usw..

Die Vorspannanordnung 4 umschliesst die seismische Masse 3 und das piezoelektrische System 2 weitgehend vollständig. Je eine Kappe 40, 40' umschliesst bereichsweise eine Aussenseite der seismischen Masse 3. Bezüglich des Mittelpunktes O und der Längsachse BB' umschliesst linksseitig eine erste Kappe 40 bereichsweise eine erste Aussenseite der seismischen Masse 3 und rechtsseitig umschliesst eine zweite Kappe 40' bereichsweise eine zweite Aussenseite der seismischen Masse 3. Bezüglich des Mittelpunktes O und der Längsachse BB' umschliesst die Hülse 41 einen mittleren Bereich der seismischen Masse 3. Die Kappen 40, 40' und die Hülse 41 überlappen sich bereichsweise. Bezüglich des Mittelpunktes O und der Längsachse BB' überlappt linksseitig die erste Kappe 40 einen ersten Endbereich der Hülse 41 und rechtsseitig überlappt die zweite Kappe 40' einen zweiten Endbereich der Hülse 41. Im Bereich der Systemelemente 20, 20' sind die Kappen 40, 40' im direkten mechanischen Kontakt mit den Systemelementen 20, 20'. Bezüglich des Mittelpunktes O und der Längsachse BB' ist linksseitig die erste Kappe 40 im mechanischen Kontakt mit einem zweiten elektrischen Isolatorelement 21' des ersten Systemelementes 20 und rechtsseitig ist die zweite Kappe 40' im mechanischen Kontakt mit einem zweiten elektrischen Isolatorelement 21' des zweiten Systemelementes 20'. Dieser mechanische Kontakt ist ein flächiger Kontakt über jeweils eine vom Mittelpunkt O abgewandte Aussenseite der zweiten elektrischen Isolatorelemente 21'. Zum Erzielen einer mechanischen Vorspannung wird eine Spannkraft flächig in die Aussenseiten der zweiten elektrischen Isolatorelemente 21' eingeleitet. Verglichen mit dem Stand der Technik der Schrift CH399021A ist die Querschnittsfläche, in welche die Spannkraft eingeleitet wird, wesentlich grösser. Die Spannhülse der Schrift CH399021A leitet die Spannkraft über einen ringförmigen Absatz mit kleiner Querschnittsfläche in die seismische Masse ein. Aufgrund der wesentlich grösseren Querschnittsfläche lässt sich erfindungsgemäss eine entsprechend grössere Spannkraft einleiten, vorzugsweise ist die Spannkraft 100% grösser, vorzugsweise ist sie 500% grösser als im Stand der Technik nach dem Datenblatt 8002_00_205d_07.05.

Die Fig. 3 und 4 zeigen im Schnitt Verfahrensschritte zur mechanischen Vorspannung des piezoelektrischen Systems 2. In einem ersten Verfahrensschritt wird die elektrische Isolation 31 bezüglich der Vertikalachse AA' zwischen den Masseelementen 30, 30' angeordnet. Daraufhin werden die Systemelemente 20, 20' bezüglich der Vertikalachse AA' zwischen den Masseelementen 30, 30' in den Aussparungen 32, 32' angeordnet. In einem weiteren Schritt wird ein Ende einer jeden Elektrode 22, 22' mit einem Masseelemente 30, 30' elektrisch und mechanisch verbunden. Nun werden die Kappen 40, 40' und die Hülse 41 über die seismische Masse 3 gelegt. Dabei überlappen die Kappen 40, 40' die Endbereiche der Hülse 41. In noch einem weiteren Verfahrensschritt spannen die Kappen 40, 40' die Systemelemente 20, 20' gegen die Masseelemente 30, 30' mechanisch vor. In diesem mechanisch angespannten Zustand werden die Kappen 40, 40' in den Endbereichen der Hülse 41 mit der Hülse 41 stoffschlüssig verbunden. Die stoffschlüssige Verbindung erfolgt durch Schweissen, Diffusionsschweissen, Thermokompressionsbonden, Löten, usw.. Nach Fig. 4 sind die Kappen 40, 40' jeweils über ringförmige Schweissnähte 43, 43' mit der Hülse 41 mechanisch verbunden. Die Schweissnähte 43, 43' sind für ein Fügewerkzeug gut zugänglich und somit einfach herzustellen. Auch sind die Schweissnähte 43, 43' an radialen Enden der schalenförmigen Kappen 40, 40' angebracht und weisen somit einen verhältnismässig grossen Radius auf, wodurch Schweisseigenspannungen gering sind.

Das piezoelektrische System 2, die seismische Masse 3 und die Vorspannanordnung 4 bilden eine piezoelektrische Aufnehmergruppe 10. Die piezoelektrische Aufnehmergruppe 10 ist vor einer Montage im Gehäuse 5 elektrisch und mechanisch testbar und lagerbar.

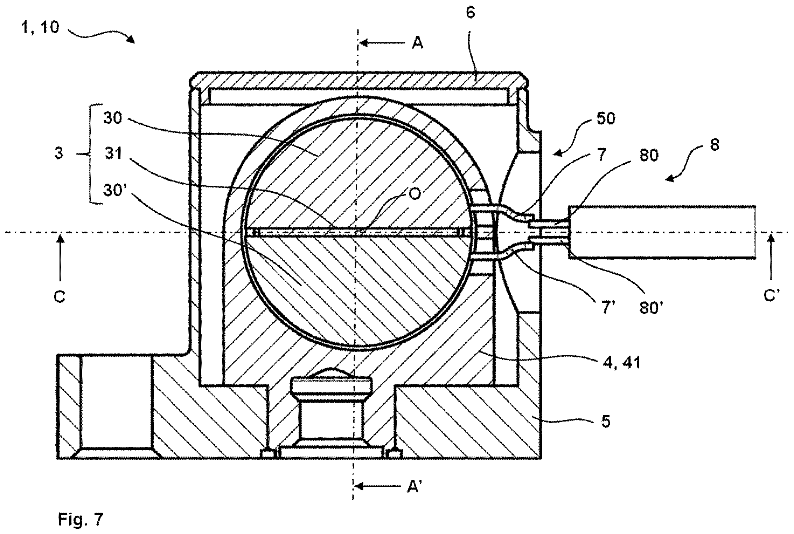

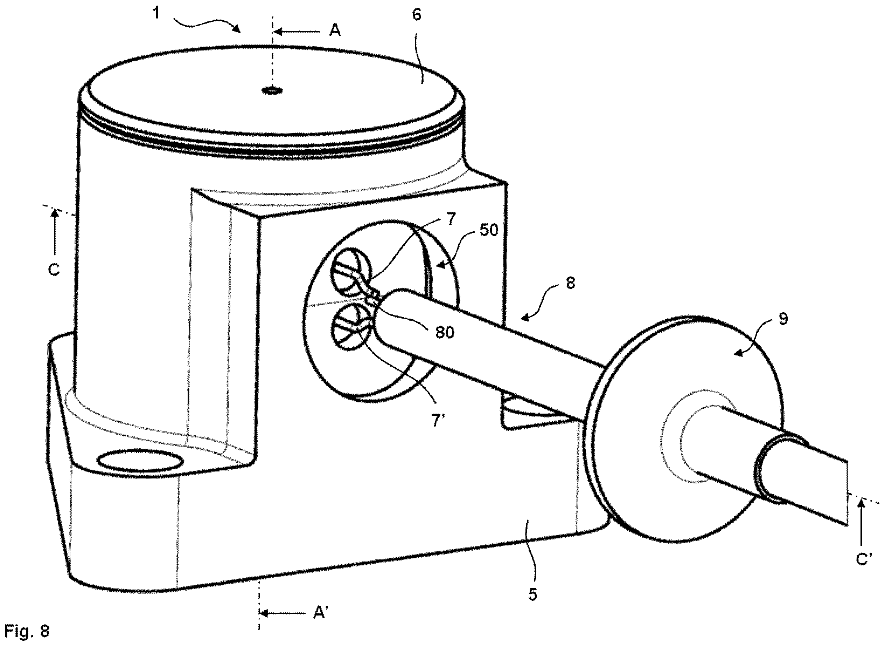

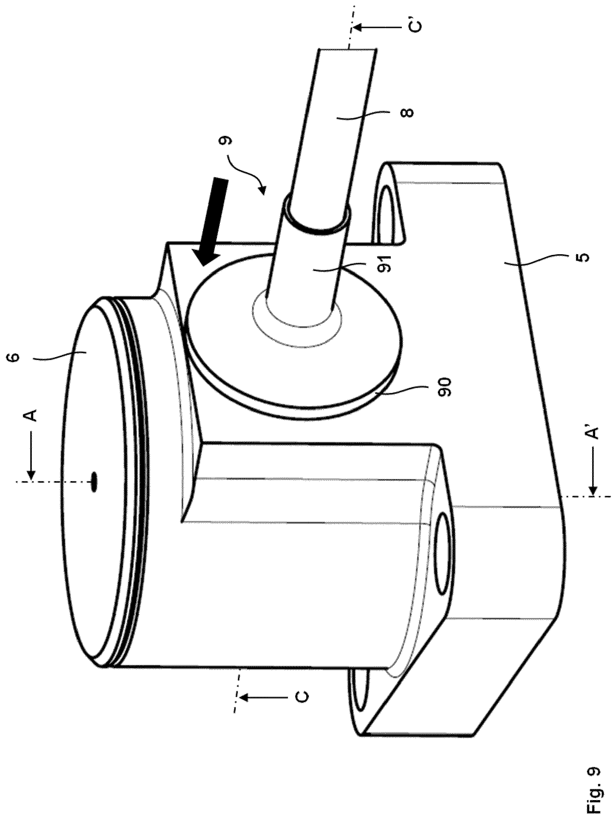

Fig. 7 zeigt einen Schnitt entlang der Horizontalachse CC' durch einen Teil der Ausführungsform des Beschleunigungs-Messgerätes 1 nach Fig. 1 und 2. Fig. 8 und 9 zeigen dazu perspektivische Ansichten. Die piezoelektrische Aufnehmergruppe 10 wird im Gehäuse 5 montiert. Dazu wird in einem ersten Verfahrensschritt die piezoelektrische Aufnehmergruppe 10 in das Gehäuse 5 gesetzt und im Bereich der Hülse 41 mit einem bezüglich des Mittelpunktes O unteren Boden des Gehäuses 5 stoffschlüssig verbunden. Die stoffschlüssige Verbindung erfolgt durch Schweissen, Diffusionsschweissen, Thermokompressionsbonden, Löten, usw.. In einem weiteren Verfahrensschritt wird die Abdeckung 6 auf einen bezüglich des Mittelpunktes O oberen Rand des Gehäuses 5 gesetzt und mit dem Gehäuse 5 stoffschlüssig verbunden. Auch die stoffschlüssige Verbindung erfolgt durch Schweissen, Diffusionsschweissen, Thermokompressionsbonden, Löten, usw..

Bezüglich des Mittelpunktes O endseitig auf der Horizontalachse CC' weist das Gehäuse 5 eine Öffnung 50 auf. Durch die Öffnung sind die Masseelemente 30, 30' von ausserhalb des Gehäuses 5 zugänglich. In einem weiteren Verfahrensschritt werden elektrische Kontaktelemente 7, 7' mit den Masseelemente 30, 30' elektrisch und mechanisch verbunden. Die elektrischen Kontaktelemente 7, 7' sind zylindrisch und bestehen aus elektrisch leitfähigem Material wie aus Reinmetallen, Nickellegierungen, Kobaltlegierungen, Eisenlegierungen, usw.. Die elektrische und mechanische Verbindung erfolgt durch Stoffschluss wie Schweissen, Diffusionsschweissen, Thermokompressionsbonden, Löten, usw.. In der Ausführung nach Fig. 7 und 8 sind die elektrischen Kontaktelemente 7, 7' kurze Drähte, die von einer Oberfläche der Masseelemente 30, 30' in den Bereich der Öffnung 50 reichen. Kurze Drähte haben den Vorteil, dass sie mechanischen Belastungen im Einsatz sehr gut widerstehen und somit langlebig und zudem kostengünstig sind.

Das Beschleunigungs-Messgerät 1 ist über ein Signalkabel 8 mit einer nicht dargestellten Auswerteeinheit elektrisch verbindbar. In der Auswerteeinheit lassen sich die Beschleunigungssignale elektrisch verstärken und auswerten. Das Signalkabel 8 weist einen Signalkabelmantel und zwei elektrische Signalleiter 80, 80' auf. Der Signalkabelmantel schützt die elektrischen Signalleiter 80, 80' vor schädlichen Umwelteinflüssen wie Verunreinigungen (Staub, Feuchtigkeit, usw.). Der Signalkabelmantel kann eine koaxiale elektromagnetische Abschirmung aufweisen und die Signalleiter vor elektrischen und elektromagnetischen Störeffekten in Form von elektromagnetischer Strahlung schützen. Die elektrischen Signalleiter 80, 80' bestehen aus elektrisch leitfähigem Material wie aus Reinmetallen, Nickellegierungen, Kobaltlegierungen, Eisenlegierungen, usw.. Die bezüglich des Mittelpunktes O vorderen Enden der elektrischen Signalleiter 80, 80' werden mit den elektrischen Kontaktelementen 7, 7' elektrisch und mechanisch verbunden. Beliebige elektrische und mechanische Verbindungen wie Stoffschluss, Formschluss und Kraftschluss sind möglich. Somit sind die die elektrischen Signalleiter 80, 80' indirekt mit den Masseelementen 30, 30' elektrisch und mechanisch verbunden. Beschleunigungssignale werden indirekt von den Masseelementen 30, 30' über die elektrischen Kontaktelemente 7, 7' auf die elektrischen Signalleiter 80, 80' elektrisch abgeleitet. Bei Kenntnis der vorliegenden Erfindung kann der Fachmann die elektrischen Kontaktelemente und die elektrischen Signalleiter auch einstückig gestalten und die elektrischen Signalleiter direkt mit den Masseelementen elektrisch und mechanisch verbinden. Beschleunigungssignale werden dann von den Masseelementen direkt auf elektrischen Signalleiter elektrisch abgeleitet.

Das Beschleunigungs-Messgerät 1 weist eine Schutzhülse 9 auf. Die Schutzhülse 9 ist hohlzylinderförmig und besteht aus bestehen aus mechanisch beständigem Material wie aus Reinmetallen, Nickellegierungen, Kobaltlegierungen, Eisenlegierungen, Kunststoff, Keramik, usw.. In weiteren Verfahrensschritten wird mit der Schutzhülse 9 die Öffnung 50 abgedichtet und das Signalkabel 8 zugentlastet. Dazu wird die Schutzhülse 9 wie in Fig. 8 und 9 dargestellt, über das Signalkabel 8 geschoben. Nachdem die elektrische und mechanische Verbindung der elektrischen Signalleiter mit den elektrischen Kontaktelementen 7, 7' realisiert ist, wird die Schutzhülse 9 gegen das Gehäuse 5 geschoben, was in Fig. 9 mit einem Pfeil gekennzeichnet ist. Die Schutzhülse weist einen Teller 90 und ein Rohr 91 auf. Teller 90 und Rohr 91 sind einstückig. Ein Durchmesser des Tellers 90 ist so dimensioniert, dass der Teller 90 die Öffnung 50 vollständig verschliessen kann. Ein radial äusserer Rand des Tellers 90 wird nun mechanisch mit dem Gehäuse 5 verbunden. Die mechanische Verbindung erfolgt durch Stoffschluss wie Schweissen, Diffusionsschweissen, Thermokompressionsbonden, Löten, usw.. Die mechanische Verbindung dichtet die Öffnung 50 gasdicht ab. Auch ist ein Durchmesser des Rohres 91 so dimensioniert, dass er geringfügig grösser als ein Aussendurchmesser des Signalkabelmantels ist. Rohr 91 und Signalkabelmantel werden nun mechanisch miteinander verbunden. Die mechanische Verbindung erfolgt durch Stoffschluss wie Kleben, Löten, usw.. oder durch Kraftschluss wie Crimpen, Klemmen, usw.. Die mechanische Verbindung bildet eine Zugentlastung der elektrischen und mechanischen Verbindung der elektrischen Signalleiter werden mit den elektrischen Kontaktelementen 7, 7'.

Die Bestandteile des Beschleunigungs-Messgerätes 1 sind so beschaffen, dass eine Betriebstemperatur von -70°C bis +700°C reicht. Als Material für das Gehäuse 5, die Abdeckung 6, die Masseelemente 30, 30', die Elektroden 22, 22', die Vorspannanordnung 4 werden daher vorzugsweise Nickellegierungen mit den Werkstoffnummern 2.4969 oder 2.4632 verwendet.

### Bezugszeichenliste

- AA': Vertikalachse
- BB': Längsachse
- CC': Horizontalachse
- O: Mittelpunkt
- 1: Beschleunigungs-Messgerät
- 2: piezoelektrisches System
- 3: seismische Masse
- 4: Vorspannanordnung
- 5: Gehäuse
- 6: Abdeckung
- 7, 7': elektrisches Kontaktelement
- 8: Signalkabel
- 9: Schutzhülse
- 10: piezoelektrische Aufnehmergruppe
- 20, 20': Systemelement
- 21, 21': elektrisches Isolatorelement
- 22, 22': Elektrode
- 23, 23', 23": piezoelektrisches Element
- 24, 24': Ende der Elektrode
- 30, 30': Masseelement
- 31: elektrische Isolation
- 32, 32': Aussparung
- 40, 40': Kappe
- 41: Hülse
- 42: Befestigungselement
- 43, 43': Schweissnaht
- 50: Öffnung
- 80, 80': elektrischer Signalleiter
- 90: Teller
- 91: Rohr

## Patentansprüche

1. Beschleunigungs-Messgerät (1) mit einem piezoelektrischen System (2), einer seismischen Masse (3) und eine Vorspannanordnung (4); bei Beschleunigung übt die seismische Masse (3) eine ihrer Beschleunigung proportionale Kraft auf das piezoelektrische System (2) aus, welche Kraft im piezoelektrischen System (2) piezoelektrische Ladungen erzeugt, und welche piezoelektrischen Ladungen als Beschleunigungssignale elektrisch abgreifbar sind, **dadurch gekennzeichnet, dass** die seismische Masse (3) zwei Masseelemente (30, 30') aufweist; dass positive piezoelektrischen Ladungen an einem ersten Masseelement (30) als Beschleunigungssignale elektrisch abgreifbar sind; und dass negative piezoelektrischen Ladungen an einem zweiten Masseelement (30') als Beschleunigungssignale elektrisch abgreifbar sind.

2. Beschleunigungs-Messgerät (1) nach Anspruch 1, **dadurch gekennzeichnet, dass** das die Masseelemente (30, 30') mittels einer elektrischen Isolation (31) gegeneinander elektrisch isoliert sind.

3. Beschleunigungs-Messgerät (1) nach einem der Ansprüche 1 oder 2, **dadurch gekennzeichnet, dass** das piezoelektrische System (2) zwei Systemelemente (20, 20') aufweist.

4. Beschleunigungs-Messgerät (1) nach Anspruch 3, **dadurch gekennzeichnet, dass** jedes Systemelement (20, 20') mehrere piezoelektrische Elemente (23, 23', 23") und mehrere elektrische Isolatorelemente (21, 21') aufweist; und dass die piezoelektrischen Elemente (23, 23', 23") zwischen den elektrischen Isolatorelementen (21, 21') angeordnet sind.

5. Beschleunigungs-Messgerät (1) nach einem der Ansprüche 3 oder 4, **dadurch gekennzeichnet, dass** das jedes Systemelement (20, 20') eine positive Elektrode (22) und eine negative Elektrode (22') aufweist; dass die positive Elektrode (22) positive piezoelektrische Ladungen aufnimmt; dass die negative Elektrode (22') negative piezoelektrische Ladungen aufnimmt; dass die positive Elektrode (22) mit dem ersten Masseelement (30) elektrisch und mechanisch verbunden ist; und dass die negative Elektrode (22') mit dem zweiten Masseelement (30') elektrisch und mechanisch verbunden ist.

6. Beschleunigungs-Messgerät (1) nach Anspruch 5, **dadurch gekennzeichnet, dass** jede Elektrode (22, 22') ein Ende (24, 24') aufweist; und dass jede Elektrode (22, 22') über ihr Ende (24, 24') mit einem Masseelement (30, 30') elektrisch und mechanisch verbunden ist.

7. Beschleunigungs-Messgerät (1) nach einem der Ansprüche 5 oder 6, **dadurch gekennzeichnet, dass** jede Elektrode (22, 22') mehrere Elektrodenflächen aufweist, die über Gelenke mechanisch miteinander verbunden sind; und dass die Elektrode (22, 22') mit den Elektrodenflächen piezoelektrische Ladungen von mehreren piezoelektrischen Elementen (23, 23' 23") sammelt.

8. Beschleunigungs-Messgerät (1) nach einem der Ansprüche 3 bis 7, **dadurch gekennzeichnet, dass** die Systemelemente (20, 20') in Aussparungen (32, 32') der Masseelemente (30, 30') angeordnet sind.

9. Beschleunigungs-Messgerät (1) nach einem der Ansprüche 1 bis 8, **dadurch gekennzeichnet, dass** das Beschleunigungs-Messgerät (1) ein Gehäuse (5) mit einer Öffnung (50) aufweist; und dass die Masseelemente (30, 30') durch die Öffnung (50) elektrisch und mechanisch mit einem Signalkabel (8) verbunden sind.

10. Beschleunigungs-Messgerät (1) nach Anspruch 9, **dadurch gekennzeichnet, dass** das Signalkabel (8) zwei elektrische Signalleiter (80, 80') aufweist; dass die elektrischen Signalleiter (80, 80') direkt oder indirekt mit den Masseelementen (30, 30') elektrisch und mechanisch verbunden sind; und dass die elektrischen Signalleiter (80, 80') Beschleunigungssignale von den Masseelementen (30, 30') elektrisch ableiten.

11. Verfahren zur Herstellung eines Beschleunigungs-Messgerät (1) nach einem der Ansprüche 1 bis 10, **dadurch gekennzeichnet, dass** die Systemelemente (20, 20') zwischen den Masseelementen (30, 30') angeordnet werden; und dass Elektroden (22, 22') der Systemelemente (20, 20') mit den Masseelementen (30, 30') elektrisch verbunden werden.

12. Verfahren nach Anspruch 11, **dadurch gekennzeichnet, dass** mehrere piezoelektrische Elemente (23, 23', 23") und mehrere elektrische Isolatorelemente (21, 21') zu einem Systemelement (20, 20') gestapelt werden; dass in jedem Systemelement (20, 20') die piezoelektrischen Elemente (23, 23', 23") zwischen den elektrischen Isolatorelementen (21, 21') angeordnet werden; und dass in jedem Systemelement (20, 20') zwei Elektroden (22, 22') mit mehreren Elektrodenflächen an Oberflächen der piezoelektrischen Elementen (23, 23', 23") angeordnet werden.

13. Verfahren nach einem der Ansprüche 11 oder 12, **dadurch gekennzeichnet, dass** ein Gehäuse (5) des Beschleunigungs-Messgerätes (1) eine Öffnung (50) aufweist und dass die Masseelemente (30, 30') durch die Öffnung (50) elektrisch und mechanisch mit einem Signalkabel (8) verbunden werden.

14. Verfahren nach Anspruch 13, **dadurch gekennzeichnet, dass** das Signalkabel (8) zwei elektrische Signalleiter (80, 80') aufweist und dass die elektrischen Signalleiter (80, 80') direkt oder indirekt mit den Masseelementen (30, 30') elektrisch und mechanisch verbunden werden.

## Claims

1. An acceleration measuring device (1) comprising a piezoelectric system (2), a seismic mass (3), and a preloading assembly (4); wherein during acceleration the seismic mass (3) exerts a force proportional to its acceleration onto the piezoelectric system (2) said force generating piezoelectric charges in the piezoelectric system (2), and wherein said piezoelectric charges can be electrically picked up as acceleration signals, **characterized in that** the seismic mass (3) comprises two mass elements (30, 30') ; positive piezoelectric charges can be electrically picked up as acceleration signals at a first mass element (30); and **in that** negative piezoelectric charges can be electrically picked up as acceleration signals at a second mass element (30').

2. The acceleration measuring device (1) according to claim 1, **characterized in that** said mass elements (30, 30') are electrically insulated against each other by means of an electrical insulation (31).

3. The acceleration measuring device (1) according to any of claims 1 or 2, **characterized in that** the piezoelectric system (2) comprises two system elements (20, 20').

4. The acceleration measuring device (1) according to claim 3, **characterized in that** each system element (20, 20') comprises a plurality of piezoelectric elements (23, 23', 23") and a plurality of electrical insulator elements (21, 21') ; and **in that** said piezoelectric elements (23, 23', 23") are arranged between the electrical insulator elements (21, 21').

5. The acceleration measuring device (1) according to any of claims 3 or 4, **characterized in that** each system element (20, 20') comprises a positive electrode (22) and a negative electrode (22') ; the positive electrode (22) receives positive piezoelectric charges; the negative electrode (22') receives negative piezoelectric charges; said positive electrode (22) being electrically and mechanically connected to the first mass element (30); and said negative electrode (22') being electrically and mechanically connected to the second mass element (30').

6. The acceleration measuring device (1) according to claim 5, **characterized in that** each electrode (22, 22') comprises an end (24, 24') ; and **in that** each electrode (22, 22') is electrically and mechanically connected via its end (24, 24') to a mass element (30, 30').

7. The acceleration measuring device (1) according to any of claims of 5 or 6, **characterized in that** each electrode (22, 22') comprises a plurality of electrode surfaces that are mechanically connected to one another by hinges; and that the electrode (22, 22') collects piezoelectric charges from a plurality of piezoelectric elements (23, 23', 23") by means of said electrode surfaces.

8. The acceleration measuring device (1) according to any of claims 3 to 7, **characterized in that** the system elements (20, 20') are arranged in recesses (32, 32') of the mass elements (30, 30').

9. The acceleration measuring device (1) according to any of claims 1 to 8, **characterized in that** said acceleration measuring device (1) comprises a housing (5) having an opening (50); and **in that** the mass elements (30, 30') are electrically and mechanically connected to a signal cable (8) through the opening (50).

10. The acceleration measuring device (1) according to claim 9, **characterized in that** the signal cable (8) comprises two electrical signal conductors (80, 80'); said electrical signal conductors (80, 80') being directly or indirectly electrically and mechanically connected to the mass elements (30, 30') ; and **in that** said electrical signal conductors (80, 80') electrically transmit acceleration signals from the mass elements (30, 30').

11. A method for manufacturing an acceleration measuring device (1) according to any of claims 1 to 10, **characterized in that** the system elements (20, 20') are arranged between the mass elements (30, 30') and electrodes (22, 22') of the system elements (20, 20') are electrically connected to said mass elements (30, 30').

12. The method according to claim 11, **characterized in that** a plurality of piezoelectric elements (23, 23, 23") and a plurality of electrical insulator elements (21, 21') are stacked on top of each other to form a system element (20, 20'); wherein in each system elements (20, 20') the piezoelectric elements (23, 23', 23") are arranged between the electrical insulator elements (21, 21') ; and in each system element (20, 20') two electrodes (22, 22') having a plurality of electrode surfaces are arranged at surfaces of the piezoelectric elements (23, 23, 23").

13. The method according to any of claims 11 or 12, **characterized in that** a housing (5) of the acceleration measuring device (1) comprises an opening (50) and the mass elements (30, 30') are electrically and mechanically connected to a signal cable (8) through said opening (50).

14. The method according to claim 13, **characterized in that** the signal cable (8) comprises two electrical signal conductors (80, 80') and said electrical signal conductors (80, 80') are directly or indirectly electrically and mechanically connected to the mass elements (30, 30').

## Revendications

1. Dispositif de mesure d'accélération (1) comprenant un système piézoélectrique (2), une masse sismique (3) et un ensemble de prétension (4); dans lequel, lors d'une accélération, la masse sismique (3) exerce une force proportionnelle à son accélération sur le système piézoélectrique (2), ladite force générant des charges piézoélectriques dans le système piézoélectrique (2) et lesdites charges piézoélectriques pouvant être prélevées électriquement en tant que signaux d'accélération, **caractérisé en ce que** ladite masse sismique (3) comprend deux éléments de masse (30, 30') et **en ce que** des charges piézoélectriques positives peuvent être prélevées électriquement en tant que signaux d'accélération au niveau d'un premier élément de masse (30) et des charges piézoélectriques négatives peuvent être prélevées électriquement en tant que signaux d'accélération au niveau d'un deuxième élément de masse (30').

2. Dispositif de mesure de l'accélération (1) selon la revendication 1, **caractérisé en ce que** lesdits éléments de masse (30, 30') sont électriquement isolés l'un de l'autre au moyen d'un isolant électrique (31).

3. Dispositif de mesure de l'accélération (1) selon l'une quelconque des revendications 1 ou 2, **caractérisé en ce que** ledit système piézoélectrique (2) comprend deux éléments de système (20, 20').

4. Dispositif de mesure de l'accélération (1) selon la revendication 3, **caractérisé en ce que** chaque élément de système (20, 20') comprend plusieurs éléments piézoélectriques (23, 23', 23") et plusieurs éléments électriquement isolants (21 21') ; et **en ce que** lesdits éléments piézoélectriques (23, 23', 23") sont disposés entre les éléments électriquement isolants (21, 21').

5. Dispositif de mesure de l'accélération (1) selon l'une quelconque des revendications 3 ou 4, **caractérisé en ce que** chaque élément de système (20, 20') comprend une électrode positive (22) et une électrode négative (22'); que l'électrode positive (22) reçoit des charges piézoélectriques positives; l'électrode négative (22') reçoit des charges piézoélectriques négatives; ladite électrode positive (22) étant électriquement et mécaniquement connectée au premier élément de masse (30); et ladite électrode négative (22') étant électriquement et mécaniquement connectée au deuxième élément de masse (30').

6. Dispositif de mesure de l'accélération (1) selon la revendication 5, **caractérisé en ce que** chaque électrode (22, 22') comprend une extrémité (24, 24') ; et **en ce que** chaque électrode (22, 22') est électriquement et mécaniquement connectée à un élément de masse (30, 30') par son extrémité (24, 24').

7. Dispositif de mesure de l'accélération (1) selon l'une quelconque des revendications 5 ou 6, **caractérisé en ce que** chaque électrode (22, 22') comprend plusieurs surfaces d'électrode reliées mécaniquement les unes aux autres par l'intermédiaire d'articulations; et **en ce que** l'électrode (22, 22') collecte des charges piézoélectriques provenant d'une pluralité d'éléments piézoélectriques (23, 23, 23") au moyen desdites surfaces d'électrode.

8. Dispositif de mesure d'accélération (1) selon l'une quelconque des revendications 3 à 7, **caractérisé en ce que** lesdits éléments de système (20, 20') sont disposés dans des évidements (32, 32') desdits éléments de masse (30, 30').

9. Dispositif de mesure d'accélération (1) selon l'une quelconque des revendications 1 à 8, **caractérisé en ce que** ledit dispositif de mesure d'accélération (1) comprend un boîtier (5) comportant une ouverture (50); et **en ce que** les éléments de masse (30, 30') sont électriquement et mécaniquement connectés à un câble de signal (8) à travers ladite ouverture (50).

10. Dispositif de mesure de l'accélération (1) selon la revendication 9, **caractérisé en ce que** le câble de signal (8) comprend deux conducteurs de signaux électriques (80, 80'); lesdits conducteurs de signaux électriques (80, 80') étant électriquement et mécaniquement connectés directement ou indirectement aux éléments de masse (30, 30') ; et **en ce que** lesdits conducteurs de signaux électriques (80, 80') transmettent électriquement des signaux d'accélération provenant des éléments de masse (30, 30').

11. Procédé de fabrication d'un dispositif de mesure d'accélération (1) selon l'une quelconque des revendications 1 à 10, **caractérisé en ce que** les éléments de système (20, 20') sont disposés entre les éléments de masse (30, 30') ; et **en ce que** des électrodes (22, 22') des éléments de système (20, 20') sont électriquement connectés auxdits éléments de masse (30, 30').

12. Procédé selon la revendication 11, **caractérisé en ce que** plusieurs éléments piézoélectriques (23, 23', 23") et plusieurs éléments électriquement isolants (21, 21') sont empilés les uns sur les autres pour former un élément de système (20, 20') ; dans chaque élément de système (20, 20') les éléments piézoélectriques (23, 23', 23") sont disposés entre les éléments électriquement isolants (21, 21') ; et **en ce que** dans chaque élément de système (20, 20') deux électrodes (22, 22') ayant plusieurs surfaces d'électrodes sont disposées au niveau des surfaces des éléments piézoélectriques (23, 23', 23").

13. Procédé selon l'une quelconque des revendications 11 ou 12, **caractérisé en ce qu**'un boîtier (5) du dispositif de mesure d'accélération (1) comprend une ouverture (50); et en ce que les éléments de masse (30, 30') sont électriquement et mécaniquement connectés à un câble de signal (8) à travers ladite ouverture (50).

14. Procédé selon la revendication 13, **caractérisé en ce que** ledit câble de signal (8) comprend deux conducteurs de signaux électriques (80, 80') et lesdits conducteurs de signaux électriques (80, 80') sont électriquement et mécaniquement connectés directement ou indirectement aux éléments de masse (30, 30').
